# EUROPÄISCHE PATENTSCHRIFT

(11) **EP 1 317 883 B1**
(45) Veröffentlichungstag und Bekanntmachung des Hinweises auf die Patenterteilung: **21.02.2007**
(21) Anmeldenummer: 02027128.4
(22) Anmeldetag: 04.12.2002
(51) Int. Cl.: A21C 9/08

(54) **Vorrichtung und Verfahren zum Wenden einer Backware**
Apparatus and process for turning a bakery product
Dispositif et procédé pour tourner un produit de boulangerie

(30) Priorität: 05.12.2001 DE 10159654
(43) Veröffentlichungstag der Anmeldung: 11.06.2003
(73) Patentinhaber: Fritsch GmbH, 97348 Markt Einersheim (DE)
(72) Erfinder: Bernhardt, Udo, 97346 Iphofen (DE)
(74) Vertreter: Tergau & Pohl Patentanwälte

(56) Entgegenhaltungen:
- DE-A- 19 717 323
- DE-U- 8 435 163

## Beschreibung

Die Erfindung betrifft eine Vorrichtung zum Wenden von Backwaren, mit zwei einen Aufnahmebereich für die Backware zwischen sich einschließenden Aufnahmeflächen, gemäß dem Oberbegriff des Anspruchs 1. Des Weiteren betrifft die Erfindung ein Verfahren zum Wenden einer Backware, bei dem die Backware einem zwischen zwei Aufnahmeflächen gebildeten Aufnahmebereich zugeführt wird, gemäß dem Oberbegriff des Anspruchs 12.

Eine gattungsgemäße Vorrichtung sowie ein gattungsgemäßes Verfahren sind beispielsweise aus der DE 197 17 323 A1 bekannt. Hierbei sind jeweils von Förderbändern gebildete sich parallel gegenüber liegende Aufnahmeflächen für eine zu wendende Backware vorgesehen.

Das Wenden von Backwaren, d.h. das Vertauschen deren Ober- und Unterseite, ist bei vielen Verfahrensschritten in der Backwarenherstellung von der Fertigung des Teiglings bis zum fertigen Backprodukt erforderlich. Beispielsweise ist ein Verfahren gebräuchlich, bei dem Backwaren mit einer eingeschnittenen, beim Fertigprodukt die Oberseite bildenden Seite nach unten auf einem Gärgutträger liegen, so dass diese Backwaren vor dem Einschieben in den Backofen gewendet werden müssen. Durch das Gären auf dem "Kopf" soll hierbei vermieden werden, dass die Einschnitte nach dem Gären zu weit auseinander klaffen.

In größeren Bäckereibetrieben ist die Verwendung eines so genannten Gehängegärschrankes gebräuchlich, an dessen Ausgang die gegärten Backwaren bauartbedingt gewendet werden. Um die Backwaren, z.B. Laugengebäck, insbesondere Brezeln, lagerichtig zu backen, ist ein weiterer Wendevorgang entweder vor oder nach der Gärung erforderlich. Das Wenden kann manuell oder mit einer dafür vorgesehenen Vorrichtung erfolgen.

Eine Vorrichtung zum Wenden von Backwaren, besonders für die Herstellung von Laugengebäck, ist z.B. aus der DE 8435 163 U1 bekannt. Diese Wendevorrichtung weist für die Aufnahme von Teiglingen zwei parallel angeordnete Aufnahmeflächen auf, deren Abstand durch eine parallelogrammartige Verbindung variierbar ist. Zum Wenden der Teiglinge werden die Aufnahmeflächen um eine im Bereich einer der Aufnahmeflächen angeordnete Drehachse gekippt. Zur Betätigung sind zwei Schwenkarme vorgesehen. Während eine der Aufnahmeflächen von einem Förderband gebildet ist, ist die zweite Aufnahmefläche von einem Blech gebildet, das auf zwei Winkelprofilen verschiebbar gehalten ist und somit manuell in die Wendevorrichtung eingeschoben oder aus ihr entnommen werden kann. Eine maschinelle Zuführung oder Entnahme des Bleches ist nicht vorgesehen. Die Wendevorrichtung ist daher für eine automatisierte Backwarenfertigungsanlage nicht geeignet. Nachteilig ist das aufwändige Bestücken, Einschieben und Entnehmen des Bleches.

Eine Wendevorrichtung mit maschineller Zu- und Abführung der Teigstücke ist z.B. aus der DE 42 42 572 C1 als Teil einer Vorrichtung zur Herstellung von Brezeln bekannt. Hierbei wird eine auf einem oberen Endlosband liegende Brezel in gewendetem Zustand auf ein unteres Endlosband abgelegt, indem diese von der Oberseite des oberen Endlosbandes mittels einer Übergabevorrichtung an einer Umlenkwalze dieses Bandes auf die Unterseite desselben Bandes transportiert wird, wobei diese oberhalb der Oberseite des unteren Endlosbandes angeordnet ist. Die die Umlenkwalze etwa halbkreisförmig umschließende Übergabevorrichtung ist in Form einer Vielzahl frei drehbar gelagerter, im Abstand zur Umlenkwalze angeordneter dünner Walzen ausgebildet. Die Übergabevorrichtung bewirkt bei einem kontinuierlichen Produktionsprozess eine in der Regel nicht gewünschte Umkehr der Transportrichtung um 180°. Die dünnen Walzen der Übergabevorrichtung halten die Brezel jeweils nur an schmalen nahezu linienförmigen Auflagebereichen, so dass die Gefahr einer Beschädigung der Brezel besteht. Des Weiteren kann die Übergabevorrichtung nur sehr aufwändig auf unterschiedlich dicke Gebäckstücke eingestellt werden, indem jede einzelne Walze mittels Schraubbolzen, Einstellspindeln oder dgl. verstellt wird.

Eine Vorrichtung zur Übergabe von Teig-Rohlingen in gewendetem oder ungewendetem Zustand an eine Weiterbearbeitungsstation ist z.B. aus der DE 198 12 194 A1 bekannt. Hierbei werden Teig-Rohlinge mittels einer Absetzanordnung um 180° gewendet einem Gärgutträger übergeben. Aufgrund eines Abstandes zwischen Absetzanordnung und Gärgutträger befinden sich die Teig-Rohlinge beim Wenden im freien Fall, so dass diese leicht beim Auftreffen auf den Gärgutträger deformiert werden.

Der Erfindung liegt die Aufgabe zugrunde, ein die Backware schonendes Wenden in einem kontinuierlichen Produktionsprozess zu ermöglichen.

Diese Aufgabe wird erfindungsgemäß gelöst durch eine Vorrichtung zum Wenden einer Backware mit den Merkmalen des Anspruchs 1. Hierbei sind zwei Förderbänder vorgesehen, die jeweils eine von zwei gegenüberliegenden zumindest im Wesentlichen ebenen Aufnahmeflächen für die Backware bilden. Gleichbedeutend mit Backware werden im Weiteren auch die Begriffe Teigling und Gebäckstück sowie Teigstück verwendet. Aufgrund dieser Ausbildung beider Aufnahmeflächen durch jeweils ein Förderband wird zum einen eine schonende großflächige Aufnahme eines Gebäckstücks ermöglicht, zum anderen ist sowohl die Gebäckstückzuführung zur Wendevorrichtung als auch die Gebäckstückabführung auf einfache Weise in einen automatischen Produktionsprozess integrierbar.

Die beiden gegenüberliegenden Aufnahmeflächen schließen einen spitzen Winkel, vorzugsweise einen Winkel zwischen 1° und 15°, insbesondere einen Winkel zwischen 2° und 10°, ein. Vorzugsweise verjüngt sich der zwischen den Aufnahmeflächen gebildete Aufnahmebereich in der Richtung, in welcher die Gebäckstücke in die Wendevorrichtung gefördert werden. Dies hat den Vorteil, dass ein Gebäckstück, welches, wie beispielsweise eine Brezel oder ein Hörnchen, einen dickeren und einen dünneren Teil aufweist, durch die schräg gegeneinander gestellten Aufnahmeflächen an beiden Teilen gleichmäßig fixiert werden kann, ohne einen der Teile wesentlich zu deformieren.

Nicht nur eine keilartige Verjüngung der Wendevorrichtung in Förderrichtung des Gebäckstückes, sondern auch eine relative Schrägstellung der Förderbänder zueinander in Richtung quer zur Förderrichtung kann, in Abhängigkeit von Form und Lage der zu transportierenden Gebäckstücke, vorteilhaft sein. Werden beispielsweise Gebäckstücke transportiert, welche auf der linken oder rechten Seite des Förderbandes eine größere Dicke als auf der anderen Seite aufweisen, so werden auch diese Gebäckstücke großflächig mit gleichmäßigem Druck durch die entsprechend geneigten Förderbänder gehalten.

Nach einer bevorzugten Weiterbildung sind die Aufnahmeflächen relativ zueinander einstellbar, insbesondere verschiebbar und/oder kippbar. Auf diese Weise ist die Wendevorrichtung mit geringem Aufwand für die Handhabung verschiedener Gebäckarten verstellbar.

Um eine besonders weiche Lagerung des Gebäckstücks auf dem jeweiligen Förderband zu erreichen, wird dieses bei geringer Spannung bevorzugt durch eine mit Formschluss arbeitende Zugvorrichtung, beispielsweise einen Zahnriemen oder beidseitig angebrachte Ketten angetrieben. Dadurch, dass keine Antriebsleistung durch Reibung zwischen einer Walze, auf der das Förderband geführt wird und dem Förderband übertragen werden muss, kann das auch als Endlostuch bezeichnete Förderband, das bevorzugt elastische Eigenschaften aufweist, mit geringer Spannung umlaufen. Eine weitere Verbesserung wird nach einer vorteilhaften Ausgestaltung dadurch erreicht, dass das Förderband im Bereich der Aufnahmefläche mit einem elastischen Material, beispielsweise einem Schaumstoff oder einem Vließ, unterfüttert ist.

Das Gebäckstück sollte während des Wendevorgangs möglichst geringen Beschleunigungskräften ausgesetzt werden. Dies ist dadurch erreichbar, dass das Gebäckstück möglichst nah an einer Drehachse der Wendevorrichtung gehalten wird. Bevorzugt befindet sich daher die Drehachse der Wendevorrichtung etwa mittig zwischen den Aufnahmeflächen, wobei das Gebäckstück annähernd symmetrisch zur Drehachse fixiert, insbesondere geklemmt, wird.

Die Zuführung des Gebäckstücks zur sowie die Abführung des Gebäckstücks aus der Wendevorrichtung ist vorteilhafterweise derart gestaltet, dass das Gebäckstück jeweils eine geringfügige Abwärtsbewegung erfährt. Hierzu ist vorgesehen, dass eine Zuführebene für die Backware in einer Höhe zwischen den Aufnahmeflächen und eine Abführebene für die Backware unterhalb der Aufnahmeflächen angeordnet ist. Hierdurch wird eine sichere Übergabe des Gebäckstücks zwischen Zuführeinrichtung und Wendvorrichtung beziehungsweise zwischen Wendvorrichtung und Abführeinrichtung gewährleistet. Ein freier Fall des Gebäckstücks bei der Zu- oder Abführung wird dabei vermieden.

Die Aufgabe wird weiterhin erfindungsgemäß gelöst durch ein Verfahren nach Anspruch 12. Dabei ist vorgesehen, dass zum Wenden einer Backware diese einem zwischen zwei zumindest im Wesentlichen ebenen Aufnahmeflächen gebildeten Aufnahmebereich zugeführt wird, wobei die Aufnahmeflächen jeweils von einem Förderband gebildet werden, die Backware von mindestend einem der Förderbänder zum Aufnahmebereich gefördert und dort zwischen den Aufnahmeflächen fixiert wird, die Backware durch Drehung der beiden Aufnahmeflächen um eine gemeinsame Drehachse gewendet wird, und nach dem Wenden die Backware von mindestend einem der Förderbänder aus dem Aufnahmebereich heraus gefördert wird. Die Aufnahmeflächen schließen derart einen spitzen Winkel zwischen sich ein, dass sich der Aufnahmebereich für das Gebäckstück - vor dem Wendevorgang - in Förderrichtung verjüngt. Die im Hinblick auf die Vorrichtung ausgeführten bevorzugten Ausgestaltungen und Vorteile sind sinngemäß auch auf das Verfahren anwendbar.

Nachfolgend wird ein Ausführungsbeispiel der Erfindung anhand einer Zeichnung näher erläutert. Hierin zeigen in schematischer Darstellung:
- Fig. 1: eine Teigstückwendestation in Seitenansicht,
- Fig. 2: eine Draufsicht auf die Teigstückwendestation nach Fig. 1,
- Fig. 3: eine Teigstückwendestation mit schräg zueinander gestellten Aufnahmeflächen vor dem Wendevorgang, und
- Fig. 4: in einer Darstellung analog Fig. 3 die Teigstückwendestation nach dem Wendevorgang.

Einander entsprechende Teile sind in allen Figuren mit den gleichen Bezugszeichen versehen.

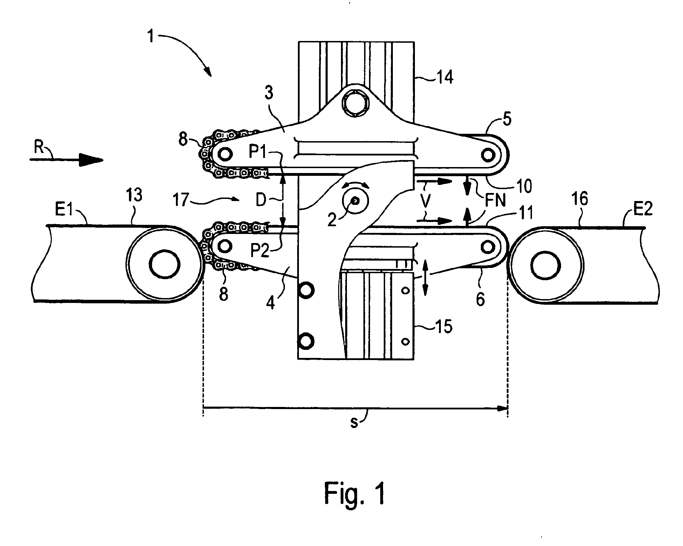

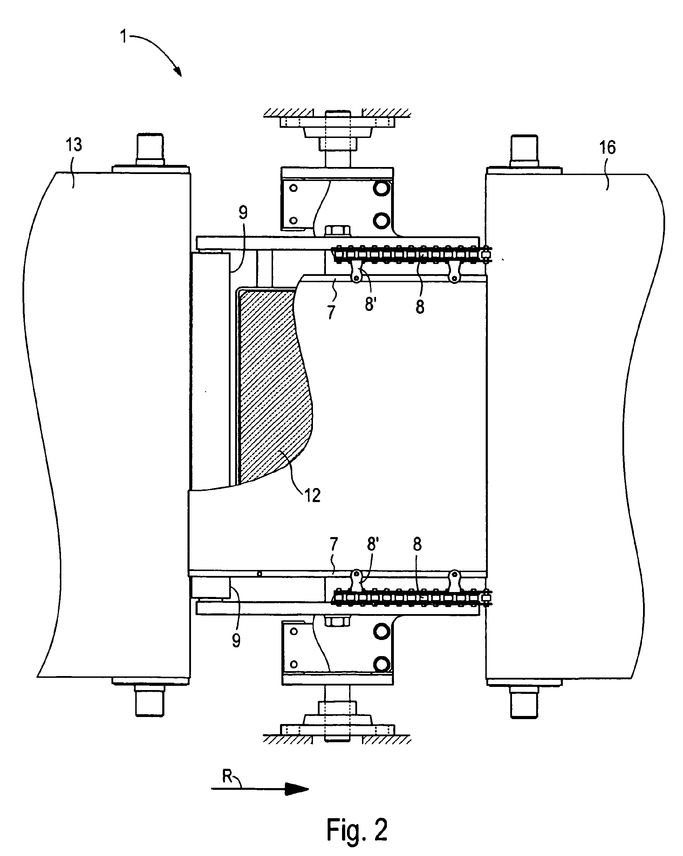

Eine im Weiteren als Teigstückwendestation 1 bezeichnete Vorrichtung zum Wenden einer Backware weist eine Drehachse 2 auf, die sich in der in Fig. 1 dargestellten Seitenansicht etwa mittig zwischen einem ersten Tisch 3 und einem darunter angeordneten zweiten Tisch 4 befindet. Beide Tische 3,4 sind jeweils mit einem Förderband 5,6 bespannt, das jeweils an dessen Rändern 7, wie aus Fig. 2 ersichtlich, von einer als Kette ausgebildeten Zugvorrichtung 8 angetrieben wird. Die Ketten 8 sind dabei über Verbindungsstücke 8' mit dem Förderband 5,6 verbunden und in nicht näher dargestellter Art und Weise motorisch angetrieben. Statt durch die Ketten 8 kann der Antrieb der Förderbänder 5,6 beispielsweise auch über mit deren Rändern 7 verbundene oder in diese integrierte Zahnriemen, Lochstreifen oder dgl. erfolgen. Die Walzen 9, auf denen das Förderband 5,6 umläuft, sind nicht angetrieben. Es ist daher eine sehr geringe Reibung zwischen dem Förderband 5,6 und der Walze 9 ausreichend, um ein Rutschen zwischen Walze 9 und Förderband 5,6 zu verhindern. Das Förderband 5,6 braucht daher nur gering gespannt zu sein. Um eine besonders schonende Fixierung eines Teigstücks zwischen den Tischen 3,4 an Aufnahmeflächen 10,11 auf den Förderbändern 5,6 zu gewährleisten, sind diese mit zusätzlichen Unterfütterungen 12 aus elastischem, weichem Material wie beispielsweise Schaumstoff versehen, die mit den Tischen 3,4 verbunden sind. Zusätzlich kann die Möglichkeit vorgesehen sein, die Stärke der Unterfütterung 12 oder einer unter dieser angeordneten Unterlage, beispielsweise pneumatisch betätigt, zu variieren. Auf diese Weise kann ein Teigling zwischen den Aufnahmeflächen 10,11 fixiert werden.

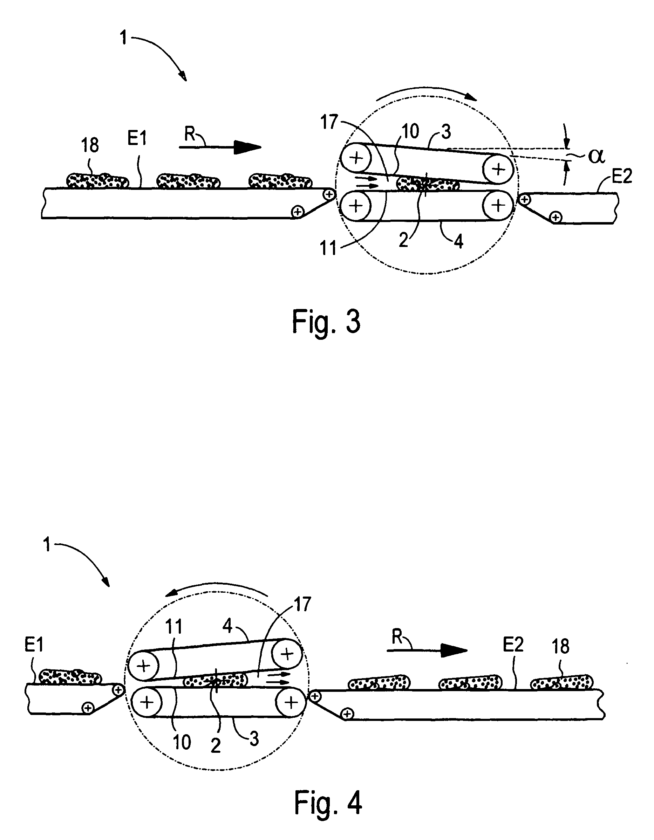

Die Tische 3,4 und damit die Aufnahmeflächen 10,11 sind gegeneinander zumindest geringfügig schräg gestellt. Auf die Schrägstellung der Anlageflächen 10,11 wird untenstehend anhand der Fig. 3 und 4 noch näher eingegangen.

Ein Gebäckstück, beispielsweise ein Brezelrohling, wird in einer Zuführebene E1 liegend von einer Zuführeinrichtung 13 aus in die Teigstückwendestation 1 eingebracht. Die Zuführebene E1 liegt geringfügig höher als die vor dem Wendevorgang unten liegende Aufnahmefläche 11. Vor dem Einbringen des Gebäckstücks in die Teigstückwendestation 1 vergrößern die Tische 3,4 im Ausführungsbeispiel nach den Fig. 1 und 2 ihren Abstand mittels Hubzylindern 14,15. Mindestens einer der Tische 3,4 ist dabei in Richtung seiner Flächennormale FN verschiebbar. Die Verschiebung in Richtung der Flächennormale FN kann dabei mit einer zumindest geringfügigen Drehbewegung mindestens einer der Tische 3,4 verbunden sein, beispielsweise um beim Einbringen eines Gebäckstücks in die Teigstückwendestation 1 die Tische 3,4 in Richtung der Zuführeinrichtung 13 weiter zu spreizen als in der Mitte der Aufnahmeflächen 10,11. Einem Anlagepunkt P1 auf dem Förderband 5 liegt im Abstand D ein Anlagepunkt P2 auf dem Förderband 6 gegenüber, wobei das Gebäckstück zwischen den Anlagepunkten P1,P2 eingeklemmt ist. Der Abstand D zwischen den Anlagepunkten P1,P2 ist somit längs einer Förderstrecke s, die sich in einer Förderrichtung R erstreckt, variabel und/oder zeitabhängig. Insbesondere bei im vorderen Bereich, in Richtung der Zuführeinrichtung 13, sowie im hinteren Bereich, in Richtung einer Abführeinrichtung 16 keilförmiger Ausbildung der Aufnahmeflächen 10,11 und/oder bei Unterfütterung 12 mit variabler Dicke ist die Teigstückwendestation 1 auch ohne die Hubzylinder 14,15 einsetzbar.

Nachdem das Gebäckstück in Förderrichtung R etwa bis zur Mitte der Teigstückwendestation 1, in den Bereich der Drehachse 2 transportiert wurde, greifen die Tische 3,4 mittels der Hubzylinder 14,15 das Gebäckstück und wenden dieses um 180°. Durch ein leichtes Anheben des unten liegenen Tisches 4 vor dem Wenden wird verhindert, dass dieser während des Wendvorgangs mit der Zuführeinrichtung 13 und/oder der Abführeinrichtung 16 kollidiert. Anschließend fahren die Tische 3,4 wieder auseinander und das Gebäckstück wird mittels der Förderbänder 5,6, die nunmehr ihre jeweilige Vorschubrichtung V gewechselt haben, zur Abführeinrichtung 16 weiter transportiert, deren Oberfläche in einer Ebene E2 liegt, die geringfügig unterhalb der nunmehr unten liegenden Aufnahmefläche 10 des Tisches 3 angeordnet ist. Die Vorschubrichtung V der Förderbänder 5,6 bezieht sich auf die Bewegung des Förderbandes 5,6 relativ zum Tisch 3,4 und ist nicht zwangsläufig mit der Förderrichtung R, die sich auf die Bewegung relativ zur gesamten, feststehenden Teigstückwendestation 1 bezieht, identisch.

Um das Gebäckstück beim Wenden keinen hohen Beschleunigungskräften auszusetzen, ist ein Aufnahmebereich 17, innerhalb dessen das Gebäckstück beim Wenden in einer sogenannten Wendposition fixiert ist, symmetrisch um die Drehachse 2 angeordnet. Es wird entweder nur ein Gebäckstück oder eine im Bereich der Drehachse 2 liegende Reihe Gebäckstücke gleichzeitig gewendet. Die Ausdehnung der Tische 3,4 in Förderrichtung R übersteigt die Ausdehnung der zu wendenden Gebäckstück nur geringfügig. Aufgrund dieser Gestaltung ist ein sowohl schneller als auch das Teigstück schonender Wendevorgang möglich. Zudem müssen vor der Teigstückwendestation 1 keine Teigstücke vor dem Wenden, etwa in einer Stauvorrichtung, gesammelt werden, so dass sich die Teigstückwendstation 1 sehr gut in einen schnell laufenden Produktionsprozess einfügt. Mittels der Hubzylinder 14,15 oder einer gesonderten, nicht näher dargestellten Verstellvorrichtung ist die Teigstückwendestation 1 leicht auf unterschiedlich dicke Gebäckstücke einstellbar.

Die Förderbänder 5,6 können alternativ zum vorstehend erläuterten Bewegungsablauf ihre Vorschubrichtung V stets beibehalten, wenn das Gebäckstück beim Einbringen in die sowie beim Ausbringen aus der Teigstückwendestation 1 lediglich vom jeweils unten liegenden Förderband 5,6 gefördert wird, während das darüber angeordnete Förderband 5,6 beabstandet vom Gebäckstück gestoppt ist. Mit Hilfe einer solchen einseitigen Gebäckstückförderung innerhalb der Teigstückwendestation 1 ist auch eine Änderung der Förderrichtung R vor und nach dem Wenden möglich, wobei in diesem Fall eines der Förderbänder 5,6 ausschließlich zum Zuführen eines Gebäckstücks und das andere der Förderbänder 5,6 ausschließlich zum Abführen eines Gebäckstücks vorgesehen ist. Die Tische 3,4 vollziehen dabei nach der 180°-Wendung eines Gebäckstücks und dem anschließenden Ausfahren desselben aus der Teigstückwendestation 1 vor der Aufnahme des nächsten Gebäckstücks eine weitere 180°-Wendung, so dass sich jeder Tisch 3,4 zwischen dem nacheinander ausgeführten Wenden zweier Gebäckstücke entweder um insgesamt 360° dreht oder einmal um 180° in eine Drehrichtung und anschließend um 180° entgegengesetzt wieder in die ursprüngliche Position dreht.

Im Ausführungsbeispiel nach den Fig. 3 und 4 ist eine Verstellung der Tische 3,4 mittels Hubzylindern beim Wendevorgang nicht vorgesehen. Die Aufnahmefläche 11 des vor dem Wenden unten befindlichen Tisches 4 ist zunächst (Fig. 3) parallel zur Zuführebene E1 und zur Abführebene E2 angeordnet. Dagegen schließt die Aufnahmefläche 10 des oberen Tisches 3 mit den Ebenen E1,E2 einen Winkel α von ca. 5° ein. Durch diese relative Schrägstellung der Tische 3,4 zueinander ist die Teigstückwendestation 1 besonders gut für Gebäckstücke wie Brezeln 18 geeignet, welche einen dünneren und einen dickeren Bereich aufweisen. Die Schrägstellung der Aufnahmeflächen 10,11 ist der Form der Brezeln 18 angepasst und bleibt während des Wendens konstant. Eine Verstellmöglichkeit der relativen Position der Tische 3,4 ist jedoch beispielsweise für den Fall eines Wechsels der zu wendenden Gebäckstücke oder bei Einstellarbeiten an der Teigstückwendestation 1 vorgesehen.

Die schräg gestellten Aufnahmeflächen 10,11 üben einen derart gleichförmigen Druck auf die zu wendenden Gebäckstücke, beispielsweise Brezeln 18, aus, dass auch bei einer hohen Taktfrequenz des Wendevorgangs sowohl eine nennenswerte Deformation als auch ein Herausfallen der Gebäckstücke aus dem Aufnahmebereich 17 ausgeschlossen ist. In Fig. 3 ist mit einem Pfeil die Drehrichtung der Tische 3,4 beim Wendevorgang angedeutet. Nach dem Wendevorgang (Fig. 4) ist der nunmehr unten liegende Tisch 3 mit dessen Aufnahmefläche 10 parallel zu den Ebenen E1,E2 ausgerichtet, während die Aufnahmefläche 11 des Tisches 4 den Winkel α zu den Ebenen E1,E2 einnimmt. Der Aufnahmebereich 17 weitet sich damit in Förderrichtung R auf. Nach dem Wendevorgang und dem Fördern der Brezeln 18 aus dem Aufnahmebereich 17 werden die Tische 3,4, wie durch einen Pfleil in Fig. 4 angedeutet, um knapp 180° zurück geschwenkt, um erneut in die Position nach Fig. 3 zu gelangen.

Die Teigstückwendestation 1 eignet sich insbesondere zur Integration in einem vorzugsweise vollautomatisch ablaufenden Verfahren zur Brezelherstellung, bei dem aus einem Teig ein Teigstrang geformt wird, aus dem Teigstrang ein Brezelrohling geformt wird, dieser automatisch gewendet und anschließend einem Gärschrank zugeführt wird, wobei der Brezelrohling nach der Gärung ein weiteres Mal gewendet wird.

### Bezugszeichenliste

- 1: Teigstückwendestation
- 2: Drehachse
- 3: Erster Tisch
- 4: Zweiter Tisch
- 5: Förderband
- 6: Förderband
- 7: Rand
- 8: Kette, Zugvorrichtung
- 8': Verbindungsstück
- 9: Walze
- 10: Aufnahmefläche
- 11: Aufnahmefläche
- 12: Unterfütterung
- 13: Zuführeinrichtung
- 14: Hubzylinder
- 15: Hubzylinder
- 16: Abführeinrichtung
- 17: Aufnahmebereich
- 18: Brezel

- α: Winkel
- D: Abstand
- E1: Zuführebene
- E2: Abführebene
- FN: Flächennormale
- P1: Anlagepunkt
- P2: Anlagepunkt
- R: Förderrichtung
- s: Förderstrecke
- V: Vorschubrichtung

## Patentansprüche

1. Vorrichtung zum Wenden einer Backware mit zwei einen Aufnahmebereich (17) für die Backware zwischen sich einschließenden zumindest im Wesentlichen ebenen Aufnahmeflächen (10,11), wobei zwei Förderbänder (5,6) vorgesehen sind, die jeweils eine der Aufnahmeflächen (10,11) aufweisen,
**dadurch gekennzeichnet,**
**dass** die beiden Aufnahmeflächen (10,11) einen spitzen Winkel (α) einschließen.

2. Vorrichtung nach Anspruch 1,
**dadurch gekennzeichnet,**
**dass** der spitze Winkel (α) mindestens 1° und maximal 15° beträgt.

3. Vorrichtung nach Anspruch 1 oder 2,
**dadurch gekennzeichnet,**
**dass** ein Abstand (D) zwischen zwei gegenüberliegenden Anlagepunkten (P1,P2) auf den Aufnahmeflächen (10,11) verstellbar ist.

4. Vorrichtung nach Anspruch 3,
**dadurch gekennzeichnet,**
**dass** der spitze Winkel (α) verstellbar ist.

5. Vorrichtung nach einem der Ansprüche 1 bis 4,
**gekennzeichnet durch**
mindestens eine mit einem der Förderbänder (5,6) verbundene Zugvorrichtung (8) zum formschlüssigen Antrieb des jeweiligen Förderbandes (5,6).

6. Vorrichtung nach Anspruch 5,
**gekennzeichnet durch**
jeweils zwei seitlich mit den Förderbändern (5,6) verbundene Ketten als Zugvorrichtungen (8).

7. Vorrichtung nach einem der Ansprüche 1 bis 6,
**gekennzeichnet durch**
eine im Bereich der Aufnahmefläche (10,11) angeordnete Unterfütterung (12).

8. Vorrichtung nach einem der Ansprüche 1 bis 7,
**dadurch gekennzeichnet,**
**dass** die Aufnahmeflächen (10,11) um eine zwischen diesen angeordnete Drehachse (2) drehbar sind.

9. Vorrichtung nach Anspruch 8,
**dadurch gekennzeichnet,**
**dass** der Aufnahmebereich (17) zur Aufnahme von Gebäckstücken ausschließlich im Bereich der Drehachse (2) vorgesehen ist.

10. Vorrichtung nach einem der Ansprüche 1 bis 9,
**dadurch gekennzeichnet,**
**dass** eine Zuführebene (E1) für die Backware in einer Höhe zwischen den Aufnahmeflächen (10,11) angeordnet ist.

11. Vorrichtung nach einem der Ansprüche 1 bis 10,
**dadurch gekennzeichnet,**
**dass** eine Abführebene (E2) für die Backware unterhalb der Aufnahmeflächen (10,11) angeordnet ist.

12. Verfahren zum Wenden einer Backware, bei dem die Backware einem zwischen zwei zumindest im Wesentlichen ebenen Aufnahmeflächen (10,11) gebildeten Aufnahmebereich (17) zugeführt wird, wobei
- die Aufnahmeflächen (10,11) jeweils von einem Förderband (5,6) gebildet werden,
- die Backware von mindestens einem der Förderbänder (5,6) zum Aufnahmebereich (17) gefördert und dort zwischen den Aufnahmeflächen (10,11) fixiert wird,
- die Backware durch Drehung der beiden Aufnahmeflächen (10,11) um eine gemeinsame Drehachse (2) gewendet wird,
- nach dem Wenden die Backware von mindestens einem der Förderbänder (5,6) aus dem Aufnahmebereich (17) heraus gefördert wird,
**dadurch gekennzeichnet,**
**dass** die Backware beim Wenden durch Schrägstellung der beiden Aufnahmeflächen (10,11) unter Einschluss eines spitzen Winkels (*α*) im sich in Förderrichtung (R) der Backware verjüngenden Aufnahmebereich (17) gehalten wird.

## Claims

1. Apparatus for turning a bakery product, with two at least essentially planar receiving surfaces (10, 11) enclosing a receiving region (17) for the bakery product between them, with two conveyor belts (5, 6) being provided, each having one of the receiving surfaces (10, 11), **characterized in that** the two receiving surfaces (10, 11) enclose an acute angle (α).

2. Apparatus according to Claim 1, **characterized in that** the acute angle (α) is at least 1° and at maximum 15°.

3. Apparatus according to Claim 1 or 2, **characterized in that** a distance (D) between two opposite bearing points (P1, P2) on the receiving surfaces (10, 11) can be adjusted.

4. Apparatus according to Claim 3, **characterized in that** the acute angle (α) can be adjusted.

5. Apparatus according to one of Claims 1 to 4, **characterized by** at least one pulling device (8) which is connected to one of the conveyor belts (5, 6), for driving the particular conveyor belt (5, 6) in a positive-locking manner.

6. Apparatus according to Claim 5, **characterized by** in each case two chains connected laterally to the conveyor belts (5, 6) as the pulling devices (8).

7. Apparatus according to one of Claims 1 to 6, **characterized by** a lining (12) arranged in the region of the receiving surface (10, 11).

8. Apparatus according to one of Claims 1 to 7, **characterized in that** the receiving surfaces (10, 11) can be rotated about an axis of rotation (2) arranged between them.

9. Apparatus according to Claim 8, **characterized in that** the receiving region (17) for receiving cake and pastry items is provided exclusively in the region of the axis of rotation (2).

10. Apparatus according to one of Claims 1 to 9, **characterized in that** a supply plane (E1) for the bakery product is arranged at a height between the receiving surfaces (10, 11).

11. Apparatus according to one of Claims 1 to 10, **characterized in that** a removal plane (E2) for the bakery product is arranged below the receiving surfaces (10, 11).

12. Process for turning a bakery product, in which the bakery product is supplied to a receiving region (17) formed between two at least essentially planar receiving surfaces (10, 11),
- the receiving surfaces (10, 11) each being formed by a conveyor belt (5, 6),
- the bakery product being conveyed to the receiving region (17) by at least one of the conveyor belts (5, 6) and being fixed in place there between the receiving surfaces (10, 11),
- the bakery product being turned by rotation of the two receiving surfaces (10, 11) about a common axis of rotation (2),
- after turning, the bakery product being conveyed out of the receiving region (17) by at least one of the conveyor belts (5, 6),
**characterized in that**, during turning, the bakery product is held in the receiving region (17), which tapers in the conveying direction (R) of the bakery product, by the two receiving surfaces (10, 11) being inclined with an acute angle (α) being enclosed.

## Revendications

1. Dispositif pour retourner un produit de boulangerie, comprenant deux surfaces de réception (10, 11) au moins sensiblement planes et formant entre elles une zone de réception (17) pour le produit de boulangerie, deux bandes de transport (5, 6), qui forment chacune l'une des surfaces de réception (10, 11), étant prévues,
**caractérisé en ce que** les deux surfaces de réception (10, 11) forment l'une avec l'autre, un angle (α) aigu.

2. Dispositif selon la revendication 1, **caractérisé en ce que** l'angle (α) aigu vaut au moins 1° et au maximum 15°.

3. Dispositif selon la revendication 1 ou 2, **caractérisé en ce qu'**une distance d'espacement (D) entre deux points d'appui (P1, P2) opposés sur les surfaces de réception (10, 11), est réglable.

4. Dispositif selon la revendication 3, **caractérisé en ce que** l'angle (α) aigu est réglable.

5. Dispositif selon l'une des revendications 1 à 4, **caractérisé par** au moins un dispositif de traction (8) relié à l'une des bandes de transport (5, 6), pour l'entraînement par complémentarité de forme de la bande de transport (5, 6) respective.

6. Dispositif selon la revendication 5, **caractérisé par** respectivement deux chaînes reliées latéralement aux bandes de transport (5, 6) et faisant office de dispositifs de traction (8).

7. Dispositif selon l'une des revendications 1 à 6, **caractérisé par** une sous-garniture de rembourrage (12) agencée dans la zone de la surface de réception (10, 11).

8. Dispositif selon l'une des revendications 1 à 7, **caractérisé en ce que** les surfaces de réception (10, 11) peuvent tourner autour d'un axe de rotation (2) agencé entre elles.

9. Dispositif selon la revendication 8, **caractérisé en ce que** la zone de réception (17) destinée à recevoir des articles de boulangerie est prévue exclusivement dans la zone de l'axe de rotation (2).

10. Dispositif selon l'une des revendications 1 à 9, **caractérisé en ce qu'**un plan d'amenée (E1) pour le produit de boulangerie est disposé à une hauteur ou à un niveau situé entre les surfaces de réception (10, 11).

11. Dispositif selon l'une des revendications 1 à 10, **caractérisé en ce qu'**un plan d'évacuation (E2) pour le produit de boulangerie est disposé en-dessous des surfaces de réception (10, 11).

12. Procédé pour retourner un produit de boulangerie, d'après lequel le produit de boulangerie est amené à une zone de réception (17) formée entre deux surfaces de réception (10, 11) au moins sensiblement planes, et selon lequel
- les surfaces de réception (10, 11) sont formées chacune par une bande de transport (5, 6),
- le produit de boulangerie est transporté par au moins l'une des bandes de transport (5, 6) à la zone de réception (17), et y est immobilisé entre les surfaces de réception (10, 11),
- le produit de boulangerie est retourné par rotation des deux surfaces de réception (10, 11) autour d'un axe de rotation (2) commun,
- après le retournement, le produit de boulangerie est transporté hors de la zone de réception (17) par l'une au moins des bandes de transport (5, 6),
**caractérisé en ce que** le produit de boulangerie est maintenu pendant le retournement, grâce à une position inclinée des deux surfaces de réception (10, 11) qui forment l'une avec l'autre un angle (α) aigu, dans la zone de réception (17) qui se rétrécit dans la direction de transport (R) du produit de boulangerie.
